# EUROPEAN PATENT SPECIFICATION

(11) **EP 1 841 163 B1**
(45) Date of publication and mention of the grant of the patent: **12.10.2011**
(21) Application number: 06111844.4
(22) Date of filing: 28.03.2006
(51) Int. Cl.: H04L 29/06

(54) **Safe transmission using non-safety approved equipment**
Sichere Übertragung mit nicht verlässlicher Ausrüstung
Transmission sûre à l'aide de l'équipement non approuvé de sûreté

(43) Date of publication of application: 03.10.2007
(73) Proprietor: SAAB AB, 581 88 Linköping (SE)
(72) Inventor: Johansson, Rikard, 589 46, Linköping (SE); Eriksson, Jan-Erik, 587 31, Linköping (SE); Stendahl, Peter, 587 27, Linköping (SE)
(74) Representative: Bengtsson, Peggy Katrin

(56) References cited:
- WO-A-2004/057553
- US-A1- 2003 130 770

## Description

### Field of the invention

The present invention refers to methods and devices within electronic systems for transferring information signals in a safe manner. In particular it refers to such methods and devices to safely communicate a message from one safety approved entity to another safety approved entity via non-safety approved entity.

### Background

When developing airborne systems equipment software, it is common to practise a standard known as RTCA/DO-178B. The standard requires systems to be classified as to criticality level. The standard requires that a system that may cause or contribute to a malfunction of a certain degree of seriousness must be developed according to certain rules. Software is classified in 5 levels, A to E, where A corresponds the most critical one, and E the least critical level. Cost for developing A and B-class software is approximately three times the cost for developing D class software. There are no requirements in RTCA/DO-178B on E-class software, so it is hard to compare costs. Software must be developed according to class A if a software error may lead to a crash with casualties, to class B if the error may lead to extensive personal injuries or severely reduced safety levels, and further levels C, D, E corresponding to less severe effects of an error.

In many applications, erroneous information may lead to very serious consequences (in these applications, class A software would be applicable). As an example, consider a case where erroneous information is sent to a weapons system, leading to erroneous firing.

Software classified as type A or B is expensive to develop and is in principle not allowed to be integrated or executed on a commercial computer using commercial-off-the-shelf software (COTS software) such as Windows or Linux operating system. Traditionally, all systems within an information chain has therefore been developed to class A or B, for the kind of functions mentioned above.

In connection with the introduction of Unmanned Aerial Vehicles (UAVs) there is a need to safely control these vehicles using principally COTS-products. This is not an alternative if the traditional method, cf. above, is to be used to achieve a safe flow of information. Also in other applications, the traditional method results in higher economical costs than would be the case if products have a lower class of criticality than A or B, or what would be the case if COTS products could be used both for hardware and software.

A typical application for the invention is to make it possible to remotely control an UAV using (in part) low cost COTS computer and software products, still fulfilling the requirements of applicable safety standards such as RTCA/DO-178B.

US 2003/130770 A1 discloses a method for assuming and maintaining secure remote control of an aircraft in the event of an attack upon, or incapacity of the pilot of the aircraft. The method includes steps of: providing a secure transmission link between a remote location and the aircraft; transmitting a command to the aircraft for interrupting pilot control; transmitting flight data from aircraft to remote location; transmitting control data to the aircraft; maintaining remote control until need for remote control has ended.

An object of the present invention is to provide a method for communication in safety critical systems without having to use safety approved equipment in all the communication chain, while still being able to fulfil applicable safety standards, such as RTCA/DO-178B.

### Summary of the invention

The above object is solved by a communications method according to claim 1. The method comprises the following steps:
- Sending a command message from a first entity to a second entity via a third entity;
- Returning, from the second entity to the first entity, an acknowledgement message of the first message comprising an encryped safety code;
- Checking, by the first entity, that the returned acknowledgement message corresponds to the originally sent message; by deciphering said acknowledgement message and checking for identicalness;
- If so, returning a go-ahead message comprising received encrypted safety code decyphered from the first entity to the second entity via the third entity;
- In the second entity, deciding, if the received safety code is correct. If the safety code is correct, commands according to the message originally sent from the first entity is executed.

In a further embodiment the method further comprises the following steps for detecting communications loss:
- Continuously, from the second entity, sending unique codes.
- Continuously, in the first entity, calculating and sending return values for each unique code based on a certain algorithm.
- Continuously, in the second entity, verifying that the calculated return value from the first entity is correct. If not so, the second entity is to perform predetermined actions due to communications loss with first entity.
- If, during transmission of messages from the first entity to the second entity, the first entity finds that the return acknowledgment message does not correspond to the sent message, the first entity will discontinue the calculation of a return value, thus forcing the second entity to take predetermined actions due to communication loss.

In another preferred embodiment the message is a command selected from a limited set of commands.

### Brief description of the drawings

These and other features, aspects and advantages of the present invention will become better understood with reference to the following description, appended claims, and accompanying drawings where
Fig. 1 is a block diagram showing the three principal entities involved when using a method according to the invention.
Fig. 2 is a block diagram showing entities of figure 1 for a preferred embodiment of the invention.
Fig. 3a and b is a flowchart for a method according to a preferred embodiment of the invention.

### Detailed description of preferred embodiments

When it comes to safe transferring of control commands, two failure modes can be identified. The first failure mode is if the command is lost or if it is erroneous but this is known. The second failure mode is when the command is erroneous but this is NOT known.

From a general point of view the second failure mode is worse than the first one. The technical solution of embodiments of the present invention handles safety aspects of the second failure mode.

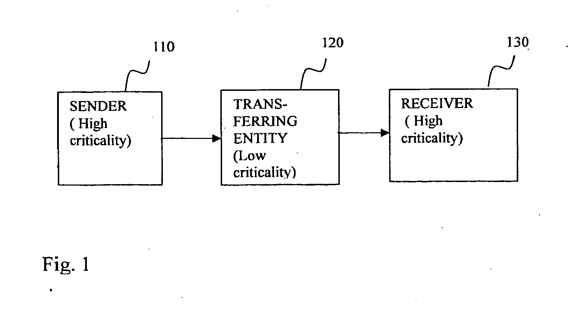

Referring to fig. 1 case two above can be generalized as follows. A sender 110 sends a command to a receiver 130. Both the sender 110 and the receiver 130 is of high criticality, i.e., they are considered, per definition, to be able to handle commands in a safe manner. Commands are sent via a transferring entity 120 of low criticality, which potentially may distort or corrupt data. If the command is designed in such a way that the receiver 130 can detect, with a high probability, that the command has been distorted (or is missing) and the receiver is provided with the capability to handle that situation, the total system i.e., the sender 110, the transferring entity 120 and the receiver 130, can be regarded as a safe system.

When judging the safety of a system according to the above, it is necessary to bear in mind all possible errors that may be induced by the transmitting entity 120. The system must in principle have such a high safety level that even if the transferring entity 120 was designed to inflict maximum damage, the system shall be able to handle this in a safe manner. The following design is devised to handle such cases of a maximum damage-inflicting transferring entity 120, and should be able to meet demands raised by airworthiness authorities.

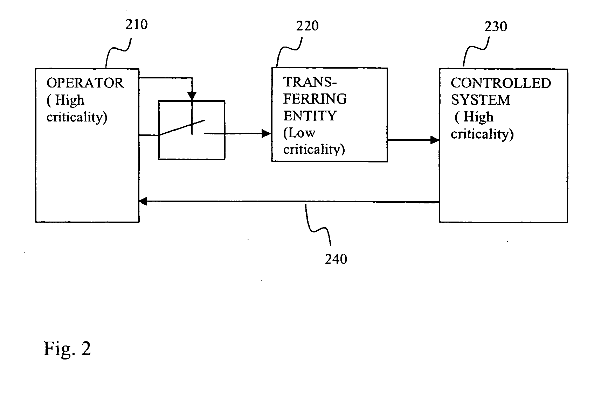

Fig. 2 shows a block diagram of a system according to a preferred embodiment of the invention. A controlled system 230 of high criticality sends all critical data to the operator 210 in such a way that any corruption of that data will be detected by the operator 210. For example, a checksum procedure may be used or the information may be sent as a picture. A method for the operator to issue a command to the controlled system 230 involves the following steps:
- The operator 210 sends a command to the controlled system 230. This may be in an arbitrary way, e.g as a 18 bit code.
- The controlled system sends an acknowledge message of the command to the operator 210 via the safe communication link 240 together with a safety code, which may be a random number. The safety code is sent in such a way that the transferring entity 220 is considered not to have gained access to the safety code. The code may be sent as a picture or it may be encrypted.
- The operator 210 checks that the controlled system has apprehended the correct command, i.e., that the transferring entity hasn't distorted data.
- If the operator is of the opinion that the controlled system 230 has apprehended the correct command, the operator 210 sends in reply a go-ahead message comprising the safety code to the controlled system 230 via the transmission entity 220. Since the transferring entity 220 has no knowledge of the code, it can be argued that the transferring entity can not generate a correct code on its own.

In one embodiment, where the code was sent as a picture, the code itself is returned; this is possible because the transferring entity cannot reasonably be expected to be aware of the code itself because it was sent from the controlled system to the operator as a picture. In an alternative embodiment the operator 210, with the aid of some equipment (not shown) deciphering of an encrypted code and returns the deciphered code. Because the transferring entity 220 is not aware of the key, the transferring entity 220 cannot gain access to the code because it was sent encrypted from the controlled system 230 to the transferring entity 220.
- When the controlled system 230 has received a correct code, it executes the command.

The controlled system 230 is devised such that it only accepts a certain number of sent codes per unit time. It is also devised to not accept codes received after a maximum time limit after the command was received. If too many codes are received per unit time or codes are received too late, the system 230 takes a predetermined action, such as disregarding the command and/or alerting the operator 210.

If the operator's command is distorted by the transferring entity, the operator will discover this when the system returns an acknowledgement of the command. The operator can then break off the connection, where after the controlled system 230 takes appropriate action.

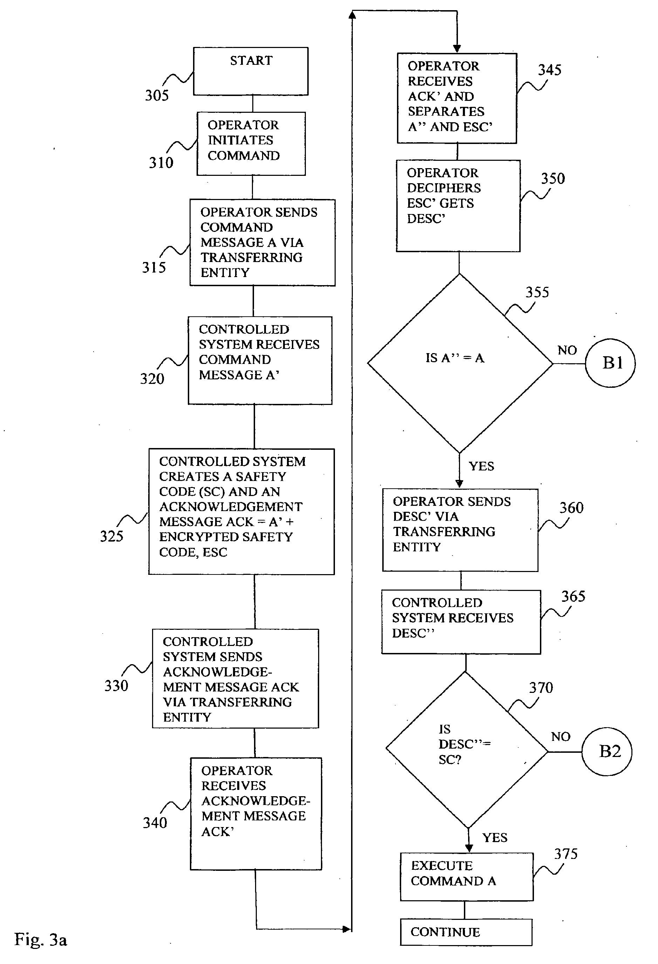

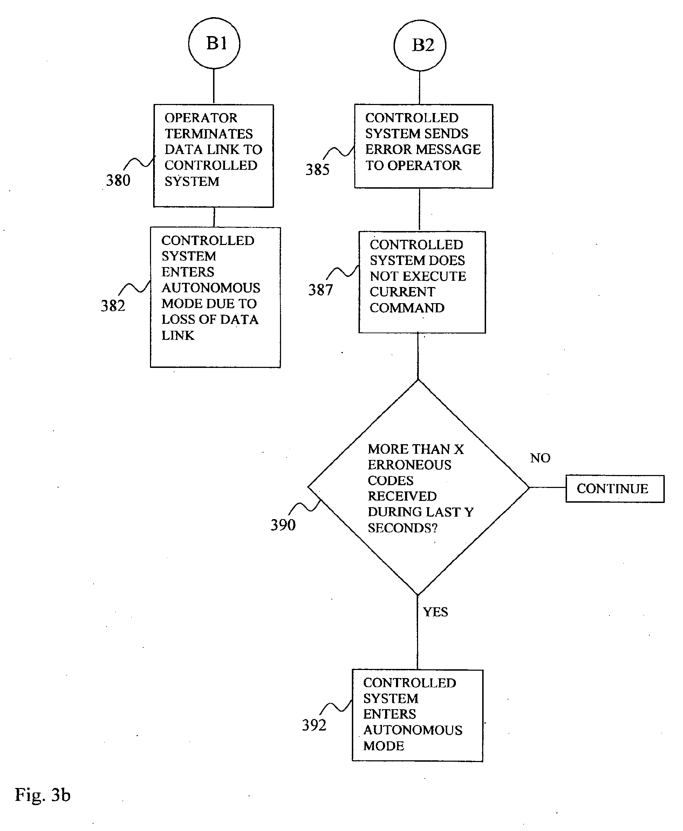

Fig. 3 shows a flowchart of a method for safe communication in the system of fig. 2. The operator initiates 310 a command, by for example typing it in. The operator sends 315 a a command message A to the controlled system via transferring entity. The controlled system receives 320 from the transferring system a command message A' which may be identical to the sent message A or distorted or corrupted in some way. Whether the transferred command message A' is distorted or corrupted or not is not decided at this point. Controlled system subsequently creates 325 a safety code SC and an acknowledgement message ACK. SC is encrypted forming an encrypted safety code ESC. ACK is formed by concatenating A' and the encrypted safety code ESC. The controlled system returns 330 acknowledgement message ACK via transferring entity. Subsequently, operator receives 340 transferred acknowledgement message ACK' which may be identical to sent acknowledgement message ACK or distorted or corrupted in some way. Operator takes ACK' and separates out 345 command message portion A" and transferred encrypted safety code portion ESC'. Operator deciphers 350 ESC' and gets deciphered ESC', here called DESC'.

By checking 355 if command message portion A" is identical to originally sent command message A, there can be decided if message is corrupted or not. If command message portion A" is identical to originally sent command message A, command message is said to be safe, i.e. correctly received by controlled system, and a go-ahead message is sent to the controlled system in the form of the deciphered ESC' DESC'.

Subsequently controlled system receives 365 the transferred DESC', i.e DESC", which may be identical to SC or corrupted in some way. Controlled system checks 370 if DESC" is identical to SC, and if so, decides that a command is safely received and executes 375 said command A.

If, when the operator checks 355 if A" is identical to A, this is not the case, the operator decides that there is not a safe transmission and therefore preferably terminates 380 data link to the controlled system. The controlled system detects this loss of data link and enters 382 an autonomous mode.

If, when the controlled system checks 370 if DESC" is identical to SC, this is not the case, the controlled system sends 385 an error message to the operator. The controlled system does not execute 387 the corresponding command A. The controlled system continuously keeps track of number of erroneous codes that have been received during a time period covering e.g the last ten seconds. If this number becomes larger 390 than a predefined limit the controlled system determines that the data link is unsafe and enters 392 an autonomous mode.

By "autonomous mode" is for the purpose of the present application meant a mode where the controlled system, which may be an UAV, enters into a self control mode and performs a number of predetermined safe actions. Said actions may include climbing to a pretermined altitude, flying to a predetermined location, and landing there.

Returning to figure 2, in a further embodiment, the controlled system is provided with a periodic code transmitter, which periodically sends a code to the operator 210, who, based on the code, sends a predetermined answer. This may be implemented as an algorithm or as a large set of predetermined code-answer pairs. The operator is provided with equipment which automatically performs the answering-operation but which the operator always can shut off in a safe way.

## Claims

1. A communications method for use in RTCA/DO-178B type A or B system equipment to safely communicate a message from a first safety approved entity (210) to a second safety approved entity (230) via a third, non-safety approved, entity comprising the following steps:
- sending (315) a command message from the first entity (210) to the second entity (230) via the third entity (220);
- returning (330, 325), from the second entity (230) to the first entity (210) an acknowledgement message of the first message comprising an encrypted safety code;
- checking (355), in the first entity, that the returned acknowledgement message corresponds to the originally sent message, by deciphering (350) said encrypted safety code from said acknowledgement message and checking a command message portion of said acknowledgement message with said sent command message for identicalness;
- if so, returning (360), from the first entity to the second entity a go-ahead message comprising received encrypted safety code deciphered;
- deciding (370), in the second entity (230), if the received safety code corresponds to the one sent to the first entity, and if so determining that it is safe to execute said command message;
- if so, executing (375) the current command;
- if not so, not executing (387) the current command.

2. The communications method of claim 1 further comprising a procedure for detecting communications loss.

3. The communications method of claim 2 where said procedure comprises the following steps:
- continuously, from the second entity, sending a unique code;
- continuously, in the first entity, calculating a return value based on some algorithm;
- continuously, in the second entity, verifying that the calculated return value from the first entity is correct, if not so, the second entity is to take proper actions due to communications loss with entity one;
- if, during transmission of messages from the first entity to the second entity, the first entity finds that the return acknowledgment message does not correspond to the sent message, the first entity will discontinue the calculation of said return value, thus forcing the second entity to take proper action due to communication loss.

## Patentansprüche

1. Kommunikationsverfahren für die Verwendung in einem RTCA/DO-178B-Typ-A oder -B-Systemgerät, um eine Nachricht sicher von einer ersten verlässlichen Einheit (210) zu einer zweiten verlässlichen Einheit (230) über eine dritte, nicht verlässliche Einheit zu übermitteln, umfassend die folgenden Schritte:
- Senden (315) einer Befehlsnachricht von der ersten Einheit (210) zu der zweiten Einheit (230) über die dritte Einheit (220);
- Rücksenden (330, 325) von der zweiten Einheit (230) zu der ersten Einheit (210) einer Rückmeldenachricht für die erste Nachricht, die einen verschlüsselten Sicherheitscode enthält;
- Prüfen (355) in der ersten Einheit, ob die zurückgesendete Rückmeldenachricht der ursprünglich gesendeten Nachricht entspricht, durch Entschlüsseln (350) des verschlüsselten Sicherheitscodes aus der Rückmeldenachricht und Überprüfen eines Befehlsnachrichtenabschnitts der Rückmeldenachricht mit der gesendeten Befehlsnachricht auf Übereinstimmung;
- sofern dies der Fall ist, Rücksenden (360) aus der ersten Einheit an die zweite Einheit einer Fortfahrnachricht, die den empfangenen entschlüsselten verschlüsselten Sicherheitscode enthält;
- Entscheiden (370) in der zweiten Einheit (230), ob der empfangene Sicherheitscode jenem entspricht, der zu der ersten Einheit gesendet wurde, und wenn dies der Fall ist, Bestimmen, dass es sicher ist, die Befehlsnachricht auszuführen;
- wenn dies der Fall ist, Ausführen (375) des momentanen Befehls und
- wenn dies nicht der Fall ist, nicht Ausführen (387) des momentanen Befehls.

2. Kommunikationsverfahren nach Anspruch 1, weiterhin umfassend einen Vorgang zum Erfassen eines Kommunikationsverlustes.

3. Kommunikationsverfahren nach Anspruch 2, wobei der Vorgang folgende Schritte umfasst:
- fortwährendes Senden eines eindeutigen Codes von der zweiten Einheit;
- fortwährendes Berechnen eines Rücksendewertes auf der Basis eines bestimmten Algorithmus' in der ersten Einheit;
- fortwährendes Verifizieren, dass der berechnete Rücksendewert aus der ersten Einheit korrekt ist, in der zweiten Einheit, wobei, wenn dies nicht der Fall ist, die zweite Einheit geeignete Maßnahmen infolge eines Kommunikationsverlustes mit der ersten Einheit zu ergreifen hat; und
- sofern während des Sendens von Nachrichten von der ersten Einheit zu der zweiten Einheit, die erste Einheit feststellt, dass die Rücksenderückmeldenachricht nicht der gesendeten Nachricht entspricht, die erste Einheit die Berechnung des Rücksendewertes unterbricht, wodurch die zweite Einheit gezwungen wird, geeignete Maßnahmen infolge des Kommunikationsverlustes zu ergreifen.

## Revendications

1. Procédé de communications destiné à être utilisé dans un équipement de système RTCA/DO-178B type A ou B pour communiquer un message de manière sûre d'une première entité à sécurité approuvée (210) à une deuxième entité à sécurité approuvée (230) via une troisième entité à sécurité non approuvée, comprenant les étapes suivantes :
- envoyer (315) un message de commande de la première entité (210) à la deuxième entité (230) via la troisième entité (220) ;
- retourner (330, 325), de la deuxième entité (230) à la première entité (210), un message d'accusé de réception du premier message comprenant un code de sécurité chiffré ;
- vérifier (355), dans la première entité, que le message d'accusé de réception retourné correspond au message envoyé à l'origine, en déchiffrant (350) ledit code de sécurité chiffré dudit message d'accusé de réception et en comparant une partie du message de commande dudit message d'accusé de réception audit message de commande envoyé pour voir s'ils sont identiques ;
- si oui, retourner (360), de la première entité à la deuxième entité, un message de continuation comprenant le code de sécurité chiffré reçu déchiffré ;
- décider (370), dans la deuxième entité (230), si le code de sécurité reçu correspond à celui envoyé à la première entité, et si oui, déterminer qu'il est sûr pour exécuter ledit message de commande ;
- si oui, exécuter (375) la commande en cours ;
- si non, ne pas exécuter (387) la commande en cours.

2. Procédé de communications selon la revendication 1, comprenant en outre une procédure pour détecter une perte de communications.

3. Procédé de communications selon la revendication 2, dans lequel ladite procédure comprend les étapes suivantes :
- de manière continue, depuis la deuxième entité, envoyer un code unique ;
- de manière continue, dans la première entité, calculer une valeur de retour sur la base d'un algorithme ;
- de manière continue, dans la deuxième entité, vérifier que la valeur de retour calculée en provenance de la première entité est correcte, si non, la deuxième entité doit entreprendre des actions adéquates en raison de la perte de communications avec l'entité un ;
- si, pendant la transmission de messages de la première entité à la deuxième entité, la première entité constate que le message d'accusé de réception de retour ne correspond pas au message envoyé, la première entité cessera le calcul de ladite valeur de retour, forçant ainsi la deuxième entité à entreprendre une action adéquate en raison de la perte de communication.
